# EUROPEAN PATENT APPLICATION

(11) **EP 2 977 246 A1**
(43) Date of publication of application: **27.01.2016**
(21) Application number: 15178108.5
(22) Date of filing: 23.07.2015
(51) Int. Cl.: B60J 5/04

(54) **SIDE DOOR STRUCTURE FOR VEHICLE**

(30) Priority: 24.07.2014 JP 2014151152
(71) Applicant: Toyota Jidosha Kabushiki Kaisha, Toyota-shi, Aichi-ken 471-8571 (JP)
(72) Inventor: IZUHARA, Tsuyoshi, TOYOTA-SHI, AICHI-KEN, 471-8571 (JP)
(74) Representative: Intès, Didier Gérard André

(57) **Abstract**

A side door structure (10) includes an inner panel (14) made of a fiber reinforced resin and formed such that a peripheral wall (14R) stands outward in a vehicle width direction from a peripheral edge of a side wall (14S), an impact beam (18) located inside the peripheral wall (14R), apart from the side wall (14S) in the vehicle width direction, and a bracket (20) that fixes a rear end portion of the impact beam (18) to the inner panel (14). The bracket (20) has a beam joint wall (20B) to which the rear end portion of the impact beam (18) is joined, a connecting wall (20C) that stands inward in the vehicle width direction from the beam joint wall (20B), and a panel joint wall (20P) connected to an end portion of the connecting wall (20C) and joined to the side wall (14S). The panel joint wall (20P) overlaps a flared portion (30A) of a vehicle body panel in the longitudinal direction.

## Description

### BACKGROUND OF THE INVENTION

### 1. Field of the Invention

The invention relates to a side door structure for a vehicle.

### 2. Description of Related Art

A side door of a vehicle having a protection member in the form of a metal plate interposed between an impact beam and a pad body for absorbing impact is known (see, for example, Japanese Patent Application Publication No. 2012-176733 (JP 2012-176733 A)). With this arrangement, a load of a side impact can be transmitted from the impact beam to the pad body via the protection member.

In the case where a fiber reinforced resin is used as a material for a part of a door panel so as to reduce the weight of the door, the amount of deformation of the side door at the time of a side-impact collision is likely to be large; thus, there is room for improvement from a point of view of load transmission from the side door to the vehicle body.

### SUMMARY OF THE INVENTION

This invention provide a vehicular side door structure that can effectively transmit a load of side impact from a side door to a vehicle body.

A vehicular side door structure according to one aspect of the invention includes a door panel made of a fiber reinforced resin and having a side wall, and a peripheral wall that stands outward in a vehicle width direction from a peripheral edge of the side wall, an impact beam located inside the peripheral wall, apart from the side wall in the vehicle width direction, and a reinforcing member having a first wall to which an end portion of the impact beam is joined, a second wall that stands inward in the vehicle width direction from the first wall, and a third wall connected to an end portion of the second wall and joined to the side wall. The third wall overlaps a vehicle body panel and the side wall in a vehicle longitudinal direction.

In the vehicular side door structure as described above, the third wall of the reinforcing member joined to the side wall of the door panel overlaps the vehicle body panel in the longitudinal direction. In other words, the third wall of the reinforcing member and the vehicle body panel are located so as to overlap each other as seen in a side view. When a side-impact collision occurs, a load of the side impact is transmitted to a portion of the side wall of the door panel made of the fiber reinforced resin, which portion overlaps the vehicle body as seen in the side view, via the impact beam and the reinforcing member (the second wall between the first and third walls). Therefore, a load transmission pathway from an instrument panel to the side wall of the door panel is ensured, and the load of side impact is effectively transmitted from the side door to the vehicle body.

Thus, the load of side impact can be effectively transmitted from the side door to the vehicle body.

In the vehicular side door structure as described above, the impact beam may be located in a lower portion of an inner side of the peripheral wall as viewed in a vehicle vertical direction, and a lock member located above the impact beam in the vehicle vertical direction may be mounted on the reinforcing member.

In this vehicular side door structure, a part of the load of side impact applied to the impact beam is distributed to a transmission pathway including the reinforcing member and the lock member, and transmitted to the vehicle body.

In the vehicular side door structure as described above, the first wall, the second wall and the third wall of the reinforcing member may be provided over a range from a joining part of the impact beam to a mounting part of the lock member.

In this vehicular side door structure, the load of side impact is effectively transmitted from the side door to the vehicle body, via a load transmission pathway provided by the second wall and third wall of the reinforcing member, over a vertically wide range that extends from the impact beam to the lock member.

In the vehicular side door structure as described above, the door panel may include a lower portion as viewed in the vehicle vertical direction, the lower portion having a round shape as seen in a side view, and a lower end of the reinforcing member as viewed in the vehicle vertical direction may coincide with an upper end portion of the lower portion having the round shape, or may be located below the upper end portion of the lower portion having the round shape, as viewed in the vehicle vertical direction.

In this vehicular side door structure, the first through third walls of the reinforcing member are provided in at least a portion of the side door located above the portion having the round shape, namely, a portion including a longitudinally large portion of the side door. Therefore, a load of side impact can be effectively transmitted from the side door to the vehicle body, via the reinforcing member, in the portion of the side door including the longitudinally large portion.

In the vehicular side door structure as described above, a plurality of connecting parts that connect the door panel to a vehicle body at least in a condition where a door opening is closed may be provided, on a side opposite to an installation side of the reinforcing member in the vehicle longitudinal direction, such that the connecting parts are spaced apart from each other in a vehicle vertical direction, and the first wall, the second wall, and the third wall of the reinforcing member may be provided over a range between installation positions of two of the connecting parts that are spaced farthest from each other in the vehicle vertical direction.

In this vehicular side door structure, one side of the side door as viewed in the vehicle longitudinal direction is connected to (supported by) the vehicle body at the two or more connecting parts, and, on the other side of the side door, the third wall of the reinforcing member overlaps the vehicle body panel as seen in a side view. In this connection, the third wall of the reinforcing member overlaps the vehicle body panel as seen in the side view, over the range between the installation positions of two of the connecting parts which are spaced farthest from each other in the vehicle vertical direction. Therefore, the load of side impact is effectively transmitted to the vehicle body while being distributed in the vertical direction, at the longitudinally opposite ends of the side door.

As explained above, the vehicular side door structure according to the invention has an excellent effect of effectively transmitting a load of side impact from the side door to the vehicle body.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1A and FIG. 1B are views each showing a principal part of a side door structure according to one embodiment of the invention, wherein FIG. 1A is an enlarged cross-sectional view showing a part of the structure to which an impact beam is fastened, and FIG. 1B is an enlarged cross-sectional view showing a lock member and its surroundings;
FIG. 2 is a planar cross-sectional view schematically showing the overall construction of the side door structure according to the embodiment of the invention;
FIG. 3 is a side view showing an inner panel and a bracket which constitute the side door structure according to the embodiment of the invention; and
FIG. 4 is a planar cross-sectional view exaggeratingly showing deformation, at the time of a side-impact collision, of a side door structure according to a comparative example to be compared with the embodiment of the invention.

### DETAILED DESCRIPTION OF EMBODIMENTS

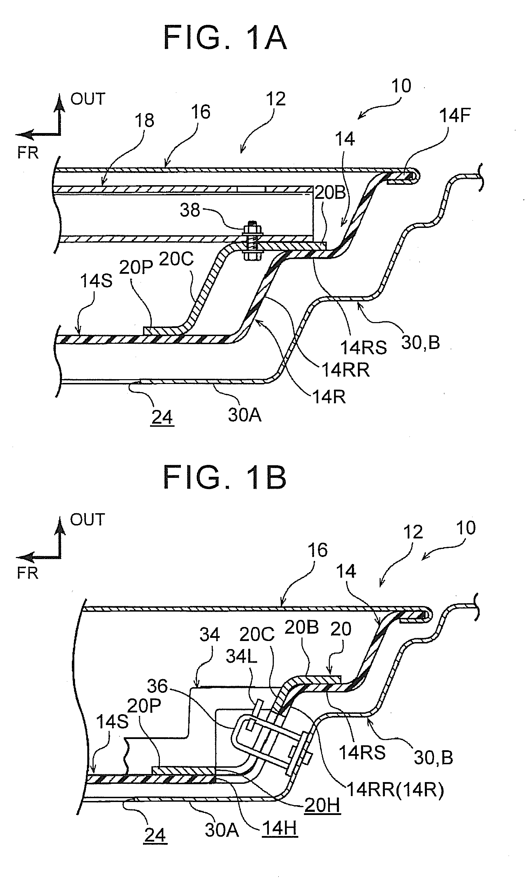

A side door structure 10 as a vehicular side door structure according to one embodiment of the invention will be described with reference to FIG. 1A through FIG. 3. In these figures, arrow FR indicates the front direction in the vehicle longitudinal direction, arrow UP indicates the upward direction in the vehicle vertical direction, while arrow OUT indicates the outer side in the vehicle width direction. In the following description, when the longitudinal and vertical directions (front, rear, up and down) are mentioned without being specified, they are supposed to mean front and rear in the vehicle longitudinal direction, and up and down in the vehicle vertical direction.

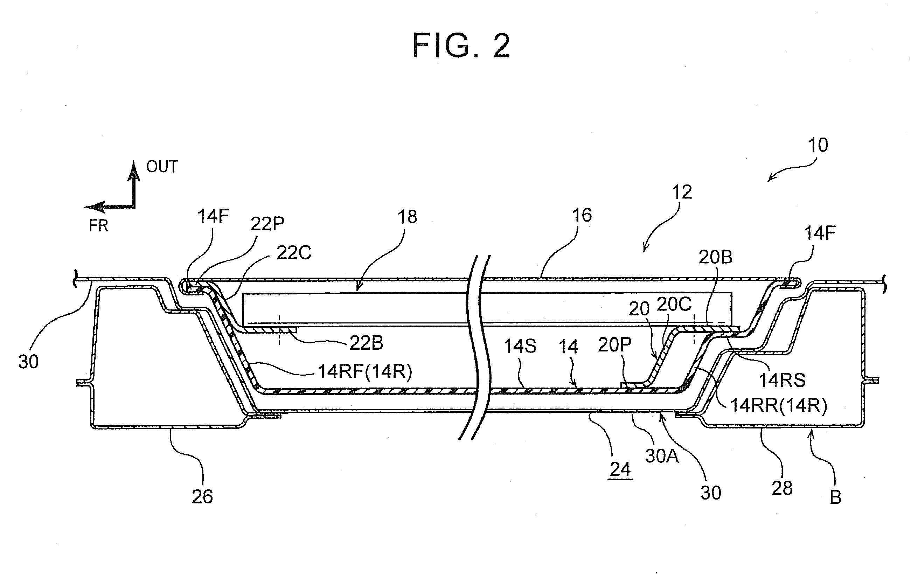

[Overall Construction of Side Door] FIG. 2 is a planar cross-sectional view schematically showing the overall construction of a side door 12 of an automobile in which the side door structure 10 is employed. As shown in FIG. 2, the side door 12 includes an inner panel 14 as a door panel, and an outer panel 16.

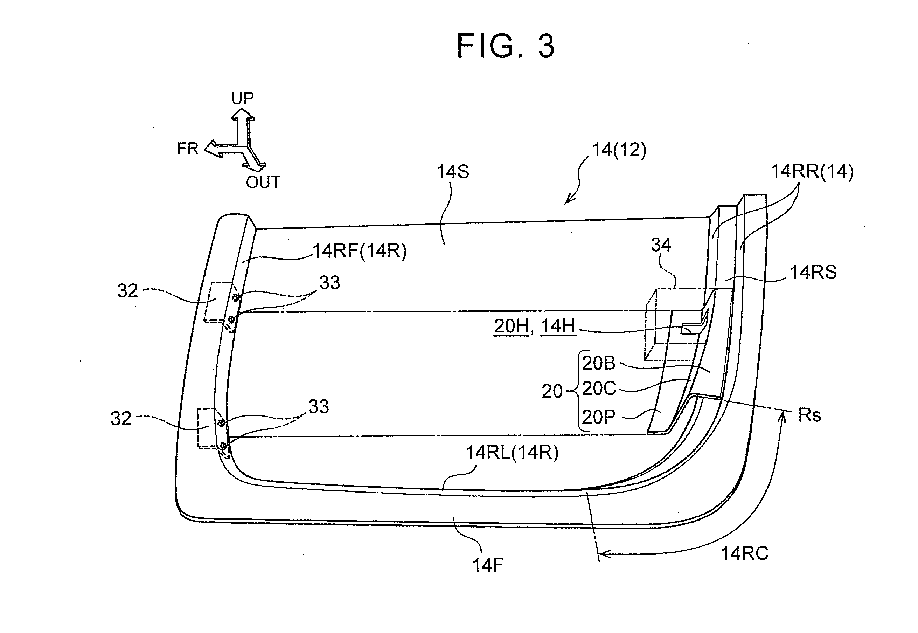

The inner panel 14 has a side wall 14S that is opposed to the outer panel 16, a peripheral wall 14R that extends outward in the vehicle width direction from a peripheral edge of the side wall 14S, and a flange portion 14F that extends outward from an outer edge of the peripheral wall 14R as viewed in the vehicle width direction. The peripheral wall 14R has at least a front wall 14RF that extends outward in the vehicle width direction from a front edge of the side wall 14S, a rear wall 14RR that extends outward in the vehicle width direction from a rear edge of the side wall 14S, and a lower wall 14RL (see FIG. 3) that extends outward in the vehicle width direction from a lower edge of the side wall 14S.

A stepped portion 14RS opposed to the outer panel 16 in the vehicle width direction is formed in a middle portion of the rear wall 14RR as viewed in the vehicle width direction. Also, as shown in FIG. 3, a portion that extends from a lower part of the rear wall 14RR to a rear part of the lower wall 14RL is formed as a rounded portion 14RC as an arc-shaped region as seen in a side view. The upper end position of the rounded portion 14RC will be referred to as "R starting point Rs".

The inner panel 14 as described above is formed of fiber reinforced resin. In this embodiment, carbon-fiber reinforced resin or plastic (which will be called "CFRP") is employed as the fiber reinforced resin.

On the other hand, the outer panel 16 forms the design of the side door 12 when viewed from the outside of the automobile, and is made of metal. In this embodiment, the metal that forms the outer panel 16 is aluminum (or aluminum alloy). A peripheral portion of the outer panel 16 is fixed to the flange portion 14F of the inner panel 14 via a hemming structure. Thus, the side door 12 is formed as a hollow structure surrounded by the outer panel 16, and the side wall 14S and peripheral wall 14R of the inner panel 14.

An impact beam 18 is mounted inside the side door 12, more specifically, on the inner side of the peripheral wall 14R of the inner panel 14. The impact beam 18 is an elongate member that extends in the longitudinal direction, and is in the form of a pipe (having a circular cross-section) in this embodiment. The impact beam 18 may employ a closed cross-sectional shape, such as a rectangular or square tubular shape, or an open cross-sectional shape, such as a W-like shape, in place of the pipe-like shape. In this embodiment, the impact beam 18 is formed of a steel material.

The impact beam 18 is fixed to the inner panel 14 via brackets (extensions) 20, 22. In this embodiment, the brackets 20, 22 are formed from steel plates. The rear bracket 20 will be described in detail later. The front bracket 22 has a panel joint wall 22P fixed to the flange portion 14F of the inner panel 14, a beam joint wall 22B to which the impact beam 18 is fixed, and a connecting wall 22C that connects the panel joint wall 22P and the beam joint wall 22B.

The impact beam 18 is positioned by the brackets 20, 22, to be located close to the outer panel 16 in the side door 12. In other words, the impact beam 18 is located apart from the side wall 14S of the inner panel 14 in the vehicle width direction.

The side door 12 as described above is arranged to open and close a door opening 24 through which a passenger gets on and off the automobile in which the side door structure 10 is used. A vehicle body B of the automobile is provided with front and rear pillars 26, 28 (e.g., a front pillar and a center pillar), and the door opening 24 is formed between the pillars 26, 28 as seen in a planar view. Each of the pillars 26, 28, when seen in a planar cross-sectional view, is a framework member having a closed cross-sectional structure, and is covered with a common side member outer panel 30 that forms an exterior panel of the vehicle body B. The side member outer panel 30 is formed with a flared portion 30A that extends from the rear pillar 28 side toward the front pillar 26 side, and the front edge of the flared portion 30A defines the rear edge of the door opening 24. The flared portion 30A may be regarded as the vehicle body panel of the invention.

The side door 12 is supported on the vehicle body B (the front pillar 26), via door hinges 32 (see FIG. 3) as connecting parts provided in a front portion of the side door 12, such that the side door 12 can be opened and closed. In this embodiment, a hinge shaft (not shown) of the door hinges 32 extends along the vertical direction, and the side door 12 pivots about the hinge shaft in the horizontal direction so as to open or close the door opening for passenger's getting on/off. In this embodiment, two door hinges 32 are provided which are spaced apart from each other in the vertical direction. Each of the door hinges 32 in this embodiment is fastened to the front wall 14RF, by means of a pair of upper and lower fastening tools (such as bolts and nuts) 33.

The side door 12 is arranged to be held at a closed position at which the door opening 24 is closed, by means of a lock member 34. As shown in FIG. 1B, the lock member 34 is provided on the side door 12, and has a latch 34L adapted to be engaged with a striker 36 provided on the pillar 28 so as to hold the side door 12 at the closed position at which the door opening 24 is closed. To open the door opening 24, a door knob is operated so as to disengage or release the latch 34L of the lock member 34 from the striker 36. A structure for mounting the lock member 34 on the side door 12 will be described later.

[Detailed Construction of Rear Bracket] The rear bracket 20 is one example of the reinforcing member of the invention, and has a function of fixing the rear end of the impact beam 18 to the inner panel 14 as described above, and has a function of transmitting a load applied to the impact beam 18 to the vehicle body B via the inner panel 14. These functions will be specifically described.

The bracket 20 has a beam joint wall 20B to which a rear end portion of the impact beam 18 is joined, a panel joint wall 20P joined to the side wall 14S of the inner panel 14, and a connecting wall 20C that connects the beam joint wall 20B and the panel joint wall 20P. The beam joint wall 20B may be regarded as the first wall of the invention, and the connecting wall 20C may be regarded as the second wall of the invention, while the panel joint wall 20P maybe regarded as the third wall of the invention.

As shown in FIG. 1A, the beam joint wall 20B extends in the longitudinal direction as seen in the planar view, and the rear end portion of the impact beam 18 is joined to a front portion of the beam joint wall 20B via a fastening structure using fastening tools (such as a bolt and a nut). A rear portion of the beam joint wall 20B is joined by adhesion, or the like, to the stepped portion 14RS of the rear wall 14RR of the inner panel 14. With this arrangement, the rear end portion of the impact beam 18 is fixed to the rear wall 14RR of the inner panel 14. The beam joint wall 20B to which the impact beam 18 is fastened may be regarded as providing a joint surface of the bracket 20 to which the impact beam 18 is fastened or joined.

The panel joint wall 20P extends in the longitudinal direction as seen in the planar view, and substantially the entire area of the panel joint wall 20P is joined by adhesion, or the like, to the side wall 14S of the inner panel 14. Thus, the panel joint wall 20P that rests on (or contacts) the side wall 14S may be regarded as providing a seating surface of the bracket 20.

The connecting wall 20C extends in the vehicle width direction as seen in the planar view, and connects the rear end of the panel joint wall 20P and the front end of the beam joint wall 20B. In this embodiment, the connecting wall 20C is opposed to the rear wall 14RR while being spaced to front apart from the rear wall 14RR. The connecting wall 20C that extends in a load direction (vertical direction) of a side impact as seen in the planar view may be regarded as providing a vertical wall surface of the bracket 20.

The bracket 20 is formed from a steel plate as described above, and is formed integrally into the above-described shape by stamping, or the like. As shown in FIG. 1A, the panel joint wall 20P of the bracket 20 overlaps the flared portion 30A of the side member outer panel 30 in the longitudinal direction. In other words, the panel joint wall 20P of the bracket 20 overlaps the flared portion 30A when viewed from the side (not shown in the drawings).

Further, as shown in FIG. 3, the bracket 20 has a vertically long shape as seen in the side view. Namely, each of the beam joint wall 20B, connecting wall 20C, and panel joint wall 20P of the bracket 20 is formed as an elongate wall whose length as measured in the vertical direction is larger than its width as measured in the direction in which the wall extends in the planar view. The upper end of the bracket 20 is located at an upper level than a lock portion (engagement position of the striker 36) of the lock member 34 located at an upper level than the impact beam 18.

The lock member 34 is fixed to the inner panel 14 via the bracket 20. More specifically, as shown in FIG. 1B, at the mounting position (height) of the lock member 34, the beam joint wall 20B is joined to the stepped portion 14RS, and the panel joint wall 20P is joined to the side wall 14S. The connecting wall 20C that connects the beam joint wall 20B and the panel joint wall 20P is placed along the rear wall 14RR (a portion on the inner side of the stepped portion 14RS as viewed in the vehicle width direction). Then, the inner panel 14 and the bracket 20 are formed with apertures 14H, 20H, respectively, which permit the striker 36 to pass therethrough in accordance with opening and closing of the door opening 24 by the side door 12. The lock member 34 is fixed to the bracket 20 such that it crosses over the aperture 20H in the vehicle width direction as seen in the planar view.

The lower end of the bracket 20 is located at the same position as the R starting point Rs of the rounded portion 14RC in the rear wall 14RR that constitutes the inner panel 14, or at a position slightly lower than the R starting point Rs.

From a point of view different from that as described above, the upper end of the bracket 20 is located at the same position as the upper one of the two door hinges 32, or is located at an upper level than the upper door hinge 32. More specifically, the position of the upper end of the bracket 20 is identical with the vertical position of the lower fastening tool 33 that fastens the upper door hinge 32 to the front wall 14RF, or the upper end of the bracket 20 is located at an upper level than the upper door hinge 32. The lower end of the bracket 20 is located at the same position as the lower one of the two door hinges 32, or is located at a lower level than the lower door hinge 32. More specifically, the position of the lower end of the bracket 20 is identical with the vertical position of the upper fastening tool 33 that fastens the lower door hinge 32 to the front wall 14RF, or the lower end of the bracket 20 is located at a lower level than the lower door hinge 32.

[Operation] Next, the operation of this embodiment will be described.

The side door 12 is supported by the vehicle body B via the upper and lower door hinges 32, and is adapted to open and close the door opening of the vehicle body B when it pivots about the hinge shaft.

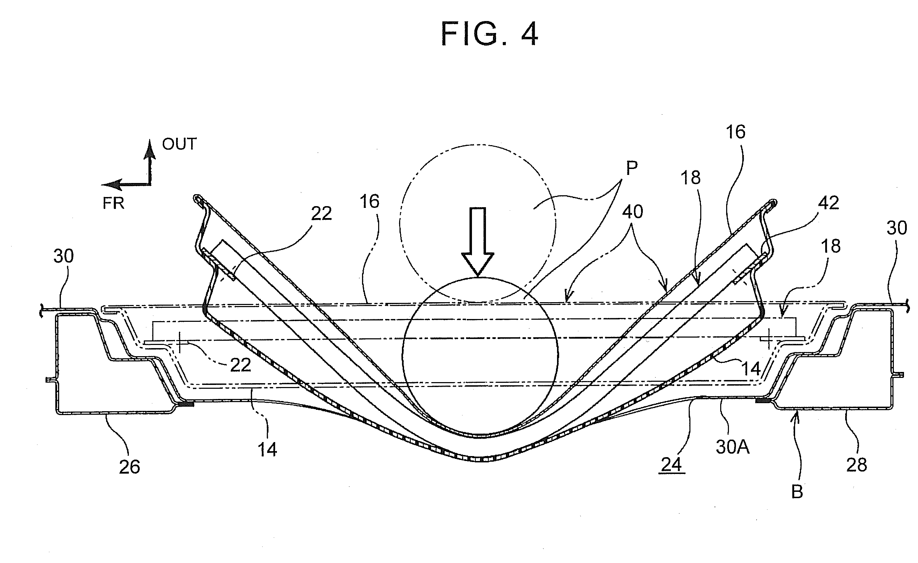

If the automobile in which the side door structure 10 is used encounters a side-impact collision, a load of the side impact (which will be called "side-impact load") is applied to the side door 12. The side-impact load is initially applied to the impact beam 18 via the outer panel 16. In the following, the operation and effect at the time of a pole side-impact collision (a form of collision in which a pole P collides against the side door 12 as shown in FIG. 4) as one form of side-impact collision will be described while being compared with those of a comparative example as shown in FIG 4.

(Construction and Operation of Comparative Example) In a side door 40 according to the comparative example shown in FIG. 4, a bracket 42 is used in place of the bracket 20. The bracket 42 is constructed similarly to the beam joint wall 20B of the bracket 20 as seen in a planar view. Also, the bracket 42 is located at the height of installation of the impact beam 18 in the vertical direction, and is formed as a separate member from a lock reinforcement that forms a mounting part of the lock member 34. The mounting structure (bracket 42) of the impact beam 18 in this comparative example is substantially the same structure as that of the arrangement including an inner panel formed from a steel plate.

If a pole P collides against a longitudinally middle portion (between the front and rear pillars 26, 28) of the side door 40 according to the comparative example as shown in FIG. 4, a side-impact load is applied to the impact beam 18 via the outer panel 16. The bracket 42 is spaced apart from the side wall 14S of the inner panel 14 in the vehicle width direction. Therefore, the side-impact load from the impact beam 18 is less likely or unlikely to be transmitted to the vehicle body B via the inner panel 14, and large reaction force cannot obtained on the rear end side of the side door 12.

Also, since the bracket 42 is a separate member from the lock reinforcement, substantially no side-impact load is transmitted from the impact beam 18 to a rear portion of the side door 12 which is connected to the vehicle body B. The insufficient load transmission from the impact beam 18 to the vehicle body B, and insufficient load transmission via the lock reinforcement, are caused by cracks that appear in the inner panel 14 made of CFRP as a brittle material when the impact beam 18 is bent.

(Operation of Embodiment) In this embodiment, on the other hand, the bracket 20 has the beam joint wall 20B joined to the impact beam 18, the panel joint wall 20P joined to the side wall 14S at the position where the wall 20P overlaps the flared portion of the vehicle body B in the longitudinal direction, and the connecting wall 20C that connects the beam joint wall 20B and the panel joint wall 20P. Therefore, a side-impact load applied to the impact beam 18 is transmitted to the flared portion 30A of the vehicle body B via the bracket 20 (mainly, the connecting wall 20C), and the inner panel 14. As a result, larger reaction force can be obtained in the rear end portion of the side door 12, as compared with the side door 40 according to the comparative example.

Furthermore, since the bracket 20 is arranged to support the lock member 34, a part of the side-impact load applied to the impact beam 18 is distributed to a transmission pathway including the lock member 34, and transmitted to the vehicle body B. In particular, the beam joint wall 20B, connecting wall 20C, and the panel joint wall 20P are formed over the range extending from the mounting part of the impact beam 18 to the mounting part of the lock member 34. Therefore, the side-impact load is transmitted from the bracket 20 to the flared portion 30A, over the range (vertically wide range) equal to the installation height of the bracket 20.

Thus, with the side door structure 10 according to this embodiment, a side-impact load can be effectively transmitted from the side door 12 to the vehicle body B, as compared with the side door 40 according to the above-described comparative example. Thus, the side door 12 in which the side door structure 10 is used has a reduced amount of deformation (intrusion) into the vehicle compartment caused by collision with a pole P, and contributes to improvement of the occupant protection performance, as compared with the side door 40 according to the comparative example.

The lower end of the bracket 20 reaches at least the R starting point Rs of the rounded portion 14RC of the inner panel 14 that constitutes the side door 12. The longitudinal length of the inner panel 14 is larger in its upper part relative to the R starting point Rs, than that in its lower part; therefore, in the upper part of the inner panel 14, the longitudinal length between support points is large, and bending deformation against the impact of the pole P is likely to be large (reaction force is likely to be small). With the bracket 20 set in the range of the side door 12 in which the longitudinal length is large, deformation of the side door 12 into the vehicle compartment against the impact of the pole P is effectively curbed or reduced.

If the above point is viewed from a different angle or perspective, in the side door structure 10, the side door 12 is connected at its front end to the vehicle body B by means of the pair of upper and lower door hinges 32, and an upper portion of the side door 12 on the rear-end side is connected to the vehicle body B by the lock member 34. With this arrangement, a side-impact load can be transmitted from the members for connecting the side door 12 with the vehicle body B, to the vehicle body B. With the bracket 20 installed as described above, the side-impact load can be transmitted from a lower portion of the side door 12 on the rear-end side, to the flared portion 30A, via the bracket 20.

Since the bracket 20 is installed over the installation range of the upper and lower door hinges 32, the side-impact load is transmitted to the vehicle body B while being distributed to a vertically wide range, at the longitudinally opposite ends of the side door 12.

While explanation about the side-impact collision of the pole P has been provided above, the side door structure 10 is also able to effectively transmit a side-impact load from the side door 12 to the vehicle body B, with respect to a side-impact collision against a vehicle, such as an automobile.

(Modified Examples) In the illustrated embodiment, the installation range of the bracket 20 in the vertical direction is determined by the R starting point Rs of the inner panel 14 and the installation height of the door hinge 32. However, this invention is not limited to this arrangement. For example, the vertical installation range of the bracket 20 may be determined by either one of the R starting point Rs of the inner panel 14 and the installation height of the door hinge 32, or may be determined irrespective of the R starting point Rs and the installation height of the door hinge 32.

While the lock member 34 is mounted on the upper portion of the bracket 20 in the illustrated embodiment, this invention is not limited to this arrangement. For example, the upper portion of the bracket 20 may be joined to a lock reinforcement on which the lock member 34 is mounted, or may be located apart from the lock reinforcement.

While the inner panel 14 is made of CFRP in the illustrated embodiment, this invention is not limited to this arrangement. For example, the inner panel 14 may be made of a fiber reinforced resin using glass or Kevlar as reinforcement fibers.

While the bracket 20 as a reinforcing member is made of metal in the illustrated embodiment, this invention is not limited to this arrangement. For example, the bracket 20 may be formed of a fiber reinforced resin, such as CFRP.

While the front end of the side door 12 is connected to the vehicle body B with the pair of (two) upper and lower door hinges 32, this invention is not limited to this arrangement. For example, the front end of the side door 12 may be connected to the vehicle body B with a single door hinge or three or more door hinges.

While an example where the side door 12 is a front side door is shown in the illustrated embodiment, this invention is not limited to this example. For example, the side door 12 may be a rear door, or may be a side door of a vehicle, such as a two-door car, having no rear doors. While this invention is applied to a front-hinge type side door in the illustrated embodiment, this invention is not limited to this application. For example, this invention may be applied to a rear-hinge type side door, or an upper-hinge type side door (so-called gull-wing door), or a side door in the form of a slide door.

While the bracket 20 is joined by fastening to the impact beam 18 in the illustrated embodiment, this invention is not limited to this arrangement. For example, the impact beam 18 and the bracket 20 may be joined by welding or adhesion.

Needless to say, this invention may be embodied with various changes or modifications, without departing from the principle and scope of the invention. For example, the arrangements (elements) of the illustrated embodiment and its modified examples may be combined as appropriate to constitute a reinforcing structure.

## Claims

1. A vehicular side door structure, comprising:
a door panel (14) made of a fiber reinforced resin, the door panel having a side wall (14S), and a peripheral wall (14R) that stands outward in a vehicle width direction from a peripheral edge of the side wall;
an impact beam (18) located inside the peripheral wall (14R), apart from the side wall (14S) in the vehicle width direction; and
a reinforcing member (20) having a first wall (20B) to which an end portion of the impact beam (18) is joined, a second wall (20C) that stands inward in the vehicle width direction from the first wall (20B), and a third wall (20P) connected to an end portion of the second wall (20C) and joined to the side wall (14S), the third wall (20P) overlapping a vehicle body panel and the side wall (14S) in a vehicle longitudinal direction.

2. The vehicular side door structure according to claim 1, wherein:
the impact beam (18) is located in a lower portion of an inner side of the peripheral wall (14R) as viewed in a vehicle vertical direction; and
a lock member (34) located above the impact beam in the vehicle vertical direction is mounted on the reinforcing member (20).

3. The vehicular side door structure according to claim 2, wherein
the first wall (20B), the second wall (20C) and the third wall (20P) of the reinforcing member (20) are provided over a range from a joining part of the impact beam (18) to a mounting part of the lock member (34).

4. The vehicular side door structure according to claim 2 or 3, wherein:
the door panel (14) includes a lower portion as viewed in the vehicle vertical direction, the lower portion having a round shape as seen in a side view; and
a lower end of the reinforcing member (20) as viewed in the vehicle vertical direction coincides with an upper end portion of the lower portion having the round shape, or is located below the upper end portion of the lower portion having the round shape, as viewed in the vehicle vertical direction.

5. The vehicular side door structure according to any one of claims 1 to 4, wherein:
a plurality of connecting parts (32) that connect the door panel (14) to a vehicle body (B) at least in a condition where a door opening is closed are provided, on a side opposite to an installation side of the reinforcing member (20) in the vehicle longitudinal direction, such that the connecting parts are spaced apart from each other in a vehicle vertical direction; and
the first wall (20B), the second wall (20C), and the third wall (20P) of the reinforcing member (20) are provided over a range between installation positions of two of the connecting parts (32) that are spaced farthest from each other in the vehicle vertical direction.
